# EUROPEAN PATENT APPLICATION

(11) **EP 3 162 218 A1**
(43) Date of publication of application: **03.05.2017**
(21) Application number: 15814065.7
(22) Date of filing: 13.05.2015
(51) Int. Cl.: A23K 50/00, A23K 40/25, A23K 20/179

(54) **METHOD FOR PRODUCING PET FOOD**

(30) Priority: 30.06.2014 JP 2014134948
(71) Applicant: Unicharm Corporation, Ehime 799-0111 (JP)
(72) Inventor: INOUE Kazunori, Itami-shi Hyogo 664-0831 (JP); MIYAMOTO Katsunori, Itami-shi Hyogo 664-0831 (JP)
(74) Representative: Dolleymores
(86) International application number: PCT/JP2015/063766
(87) International publication number: WO 2016/002353

(57) **Abstract**

Provided is a method of producing pet food in which food granules of at least two colors are mixed together, including: a food granule producing process of producing food granules of at least two colors and a mixing process of mixing the food granules of at least two colors, in which the food granule producing process includes a powder raw ingredient mixing process of mixing together powder raw ingredients to obtain mixed powder, an extruding and granulating process of supplying the mixed powder to an extrusion granulator to continuously produce food granules, and a coloring process of performing coloring by adding an additive solution that contains a coloring component to the extrusion granulator, and the mixing process includes a process of sequentially putting the food granules of at least two colors into a tank to be layered and a process of discharging the food granules from the bottom of the tank to obtain a mixture of the food granules of at least two colors.

## Description

### Technical Field

The present invention relates to a method of producing pet food that contains a mixture of food granules with different colors.

Priority is claimed on Japanese Patent Application No. 2014-134948, filed on June 30, 2014, the content of which is incorporated herein by reference.

### Background Art

As a type of pet food, so-called dry type pet food formed of food granules with a moisture content of approximately 10% by weight or less and semi-moist type pet food form of food granules with the moisture content greater than that of dry type pet food may be exemplified. In both types, mix type pet food produced by mixing food granules with different colors and accommodating the food granules in a packaging container is commercially available.

For example, the paragraph [0004] of PTL 1 describes that pet food formed by mixing small pieces colored in different colors such as red, green, and yellow has characteristics in appearance and gives purchasers satisfaction.

### Citation List

### Patent Literature

[PTL 1] Japanese Unexamined Patent Application, First Publication No. H8-70787

### Summary of Invention

### Technical Problem

As a method of producing mix type pet food formed by mixing food granules with different colors at predetermined proportions, a method of storing food granules with each color in different tanks, extracting these food granules from the tanks at a predetermined mixing ratio, and mixing the food granules may be exemplified.

However, in this method, there is a problem in that the size of a device is increased because at least the same number of tanks as the number of colors of food granules is required and thus the production cost is increased.

An object of the present invention is to provide a method of producing pet food which does not result in an increase of the size of a device and is capable of mixing food granules of at least two colors at predetermined proportions and in which the production cost can be reduced.

### Solution to Problem

The present invention is as follows.
[1] A method of producing pet food in which food granules of at least two colors are mixed together, including: a food granule producing process of producing food granules of at least two colors; and a mixing process of mixing the food granules of at least two colors, wherein the food granule producing process includes a powder raw ingredient mixing process of mixing together powder raw ingredients to obtain a mixed powder, an extruding and granulating process of supplying the mixed powder to an extrusion granulator to continuously produce food granules, and a coloring process of performing coloring by adding an additive solution that contains a coloring component to the extrusion granulator, and the mixing process includes a process of sequentially putting the food granules of at least two colors into a tank to be layered and a process of discharging the food granules from the bottom of the tank to obtain a mixture of the food granules of at least two colors.
[2] The method of producing pet food according to [1], in which additive solutions of at least two different colors are used in the coloring process to change the colors of food granules continuously produced by the extrusion granulator by changing the colors of the additive solutions and the food granules continuously discharged from the extrusion granulator are continuously put into the tank.
[3] The method of producing pet food according to [2], in which an additive solution that contains the coloring component and an additive solution that does not contain the coloring component are used in the coloring process.
[4] The method of producing pet food according to [3], in which the additive solution that contains the coloring component and the additive solution that does not contain the coloring component are alternately added in the coloring process.
[5] The method of producing pet food according to any one of [1] to [4], in which the extrusion granulator includes a pre-regulator which adds at least moisture to the mixed powder, stirs the mixture, and performs a heat treatment thereon and an extruder provided downstream of the pre-regulator, and the coloring process is performed in the extruder.
[6] The method of producing pet food according to any one of [1] to [5], in which food granules of at least two colors are layered in the tank during the mixing process such that three or more layers for each color are respectively present and then the discharge of food granules from the tank is started.

### Advantageous Effects of Invention

According to the method of producing pet food of the present invention, it is possible to mix food granules of at least two colors at predetermined proportions without increasing the size of a device and to reduce the production cost.

### Brief Description of Drawings

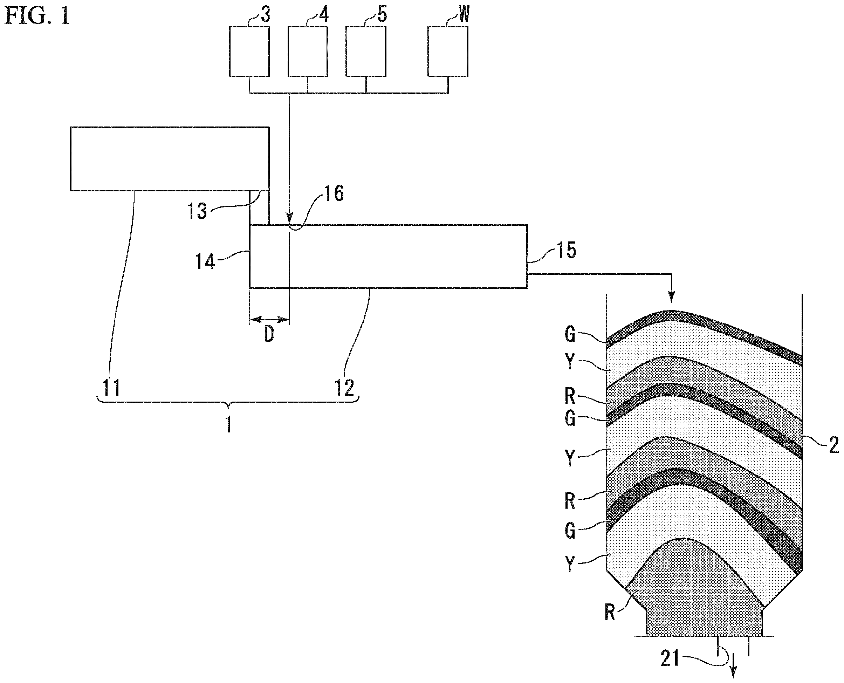

FIG. 1 is a configuration view schematically illustrating an example of a producing device according to an embodiment of the present invention.

### Description of Embodiments

In the present specification, the term "pet" indicates an animal that has been bred by a person. In a narrower sense, a pet is an animal cared for by the owner. In addition, the "pet food" indicates feed for pets. The pet food of the present invention can be sold as the "feed for animals" or "food for animals."

In the present specification, food granules indicate granular pet food.

In the present invention, the moisture content of food granules is not particularly limited, and the food granule may be dry type food granules or semi-moist type food granules.

The moisture content of dry type food granules is preferably 12% by mass or less and more preferably 10% by mass or less. The lower limit of the moisture content thereof is not particularly limited. The lower limit thereof is typically 5% by mass or greater and more preferably 7% by mass or greater.

The dry type food granules may be puffed granules or non-puffed granules.

The "puffed granules" are granules obtained by forming a raw ingredient mixture in a granular shape and also obtained by performing a puffing process of foaming in the inside of the raw ingredient mixture. The "puffing process" indicates a process of generating a gas in the inside of the raw ingredient mixture using a technique of carrying out heating, fermentation, a chemical reaction, or pressure reduction. In the puffing process, when a gas is generated, the volume of the raw ingredient mixture is increased so as to have porous properties. Further, when the volume of the raw ingredient mixture is increased, the bulk density thereof is decreased. Before, after, or at the same time with the puffing process, "puffed granules" are obtained by forming the raw ingredient mixture in a granular shape. The "non-puffed granules" are granules produced without performing the puffing process.

The bulk density of the dry type food granules depends on the moisture content thereof and the bulk density of the puffed granules is preferably in a range of 300 to 460 g/L, more preferably in a range of 350 to 450 g/L, and still more preferably in a range of 380 to 440 g/L. The bulk density of the non-puffed granules is preferably in a range of 445 to 500 g/L and more preferably in a range of 450 to 485 g/L.

The moisture content of semi-moist type granules is preferably in a range of 15% to 30% by mass and more preferably in a range of 20% to 30% by mass. Further, the water activity (Aw) of the semi-moist type granular pet food is preferably in a range of 0.60 to 0.87 and more preferably in a range of 0.70 to 0.80.

The semi-moist type food granules may be puffed granules or non-puffed granules.

In the present specification, the moisture content is a value obtained by the following measurement method.

An object to be measured is ground using a grinder so as to pass through a sieve having an opening diameter of 1 mm and then used as an analytical sample. 2 g to 5 g of the analytical sample is accurately weighed, put into an aluminum weighing dish (after the sample is dried in advance, the weight thereof is accurately weighed), dried at a temperature of 135 ± 2°C for 2 hours, and left to be cooled in a desiccator. Next, the weight thereof is accurately weighed, and then the moisture content is acquired from a difference between the weights weighed before and after the drying.

In the present specification, the moisture content of the food granules is a value obtained by measurement immediately after pet food (product) produced by accommodating the food granules in a packaging container to be sealed immediately after production is exposed within 30 days from the date of production or is a value obtained by measurement under the conditions similar to the conditions described above.

In the present specification, the value of water activity (Aw) of the food granules is a value obtained by measurement performed on a sample prepared by grinding the food granules at a measurement temperature of 25°C using a known water activity measuring device.

For example, the measurement can be carried out using a water activity measuring device "Novasina IC-500 AW-LAB (product name, manufactured by DKSH Japan K.K.)".

In the present specification, the water activity (Aw) of the food granules is a value obtained by measurement immediately after a pet food product produced by accommodating the food granules in a packaging container to be sealed immediately after production is exposed within 30 days from the date of production or is a value obtained by measurement under the conditions similar to the conditions described above.

In the present specification, the bulk density of food granules is a value obtained by the following measurement method.

Food granules falling from a hopper (funnel-shaped container) are received by a container and the food granules rising from the container are scrapped off using a metal plate or the like such that the container is fulfilled with the food granules. A value obtained by dividing a total mass M (unit: g) of the food granules in the container by an inner volume V (unit: L) of the container, that is, a value of M/V is set as a bulk density (unit: g/L).

In the present specification, the bulk density is a value obtained by measurement immediately after pet food (product) produced by accommodating food granules in a packaging container to be sealed immediately after production is exposed within 30 days from the date of production or is a value obtained by measurement under the conditions similar to the conditions described above.

### <Powder raw ingredients>

Powder raw ingredients used in the present invention are not particularly limited and known raw ingredients used in a powder shape during a process of granulating pet food can be suitably used.

Examples thereof include cereals (such as corn, wheat, rice, barley, oats, and rye), beans (such as whole soybeans), starch (such as wheat starch, corn starch, rice starch, potato starch, tapioca starch, sweet potato starch, and sago starch), vegetable protein (such as corn gluten meal, defatted soybean meal, and soybean protein), meat (such as chicken, beef, pork, venison, meals (such as chicken meal, pork meal, beef meal, and mixed meal of these)), seafood (such as fish and meals (fish meal)), vegetables, and powdery additives (such as vitamins, minerals, an amino acid, flavoring raw ingredients, fibers, colorants, and palatability enhancers).

The meals indicate powder products obtained by compressing and finely grinding meat or seafood.

Examples of the palatability enhancers include animal raw ingredient extract powder of meat and seafood; and vegetable raw ingredient extract powder.

### <Liquid raw ingredients>

### [Additive solution containing coloring component]

As liquid raw ingredients to be added to the powder raw ingredients, an additive solution that contains at least a coloring component is used.

The coloring component may be used in the field of food and a known coloring component can be used.

An aqueous solution formed by dissolving a water-soluble coloring component in water is preferable as the additive solution. Examples of the water-soluble coloring component include Food Red No. 106, Food Red No. 102, Food Yellow No. 4, Food Yellow No. 5, and Food Blue No. 1.

### [Other liquid raw ingredients]

As liquid raw ingredients to be added to the powder raw ingredients, known liquid raw ingredients in the production of pet food, such as water, oils and fats, liquid sugar, a humectant, a palatability enhancing solution, and a flavoring agent, can be used if necessary. The liquid raw ingredients may be used alone or in combination of two or more kinds thereof.

The oils and fats may be vegetable oils and fats or animal oils and fats. From the viewpoint of easily obtaining high palatability, it is preferable to use animal oils and fats. Examples of the animal oils and fats include chicken oil, lard, beef tallow (fat), and milk fats and oils.

One or more humectants selected from the group consisting of propylene glycol, glycerin, and sugar alcohol are preferably used as the humectant.

Examples of the palatability enhancers include animal raw ingredient extracts of meat and seafood, vegetable raw ingredient extracts, extracts in a state of an aqueous solution, and water-soluble concentrated extracts.

### [Blending]

The blending of raw ingredients is not particularly limited. It is preferable that the raw ingredients are set to be blended such that the target nutritional composition of food granules to be obtained and excellent formability are obtained.

Blending (not including external additives) examples of dry type food granules and semi-moist type food granules are described below.

### (Blending example of dry type food granules)

40% to 70% by mass of cereals, beans, and starch in total, 5% to 30% by mass of meat and seafood in total, 0% to 15% by mass of vegetable protein; and other components as the remainder.

### (Blending example of semi-moist type food granules)

20% to 60% by mass of cereals, beans, and starch in total, 5% to 25% by mass of meat and seafood in total, 0% to 15% by mass of vegetable protein; and other components as the remainder.

### <Embodiment of method of producing pet food>

FIG. 1 is a configuration view schematically illustrating an example of a producing device suitable for carrying out a method of producing pet food according to the present embodiment.

In the figure, the reference numeral 1 represents an extrusion granulator, the reference numeral 11 represents a pre-regulator (hereinafter, also referred to as a pre-conditioner), the reference numeral 12 represents an extruder, the reference numeral 2 represents a tank, and the reference numerals 3, 4, and 5 respectively represent an additive solution.

### [Food granules producing process]

### (Powder raw ingredient mixing process)

The powder raw ingredients are mixed using a mixing device (not illustrated) to obtain mixed powder. The mixing process can be performed using a suitable known technique. Raw ingredients ground in a powder shape in advance may be mixed together or raw ingredients may be mixed together while being ground using a grinder or the like.

### (Extruding and granulating process)

Food granules are continuously produced by supplying mixed powder to an extrusion granulator 1. In the extrusion granulator 1, moisture is added to the mixed powder, the mixed powder is kneaded while being conveyed toward an outlet 15 from the inlet thereof and is extruded from the outlet 15 after a heat treatment is carried out. The outlet 15 is provided with a plate (not illustrated) in which a hole having a predetermined shape is formed and a cutter (not illustrated) that cuts a kneaded material extruded from the plate to have a predetermined length (thickness). The kneaded material is extruded from the hole of the plate and cut by the cutter so that the kneaded material is formed in a predetermined granular shape.

Puffed granules can be produced by pressing the kneaded material in the extrusion granulator 1, allowing the kneaded material to be released from the pressurized state by the outlet 15 to a normal pressure, and expanding water vapor in the kneaded material. Non-puffed granules may be produced without pressurizing the kneaded material in the extrusion granulator 1.

An extrusion granulator including a pre-conditioner 11 and an extruder 12 is preferable as the extrusion granulator 1.

In the pre-conditioner 11, moisture is added to the mixed powder obtained by the powder raw ingredient mixing process and then the heat treatment is performed. Typically, the mixed powder is conveyed toward an outlet from an inlet while being stirred in the pre-conditioner 11 and the heat treatment is carried out while the moisture content is increased by adding water and water vapor to the mixed powder. The mixture discharged from an outlet 13 of the pre-conditioner 11 is supplied to the extruder 12.

In the extruder 12, the mixture (raw ingredient mixture) mixed in the pre-conditioner 11 is subjected to the heat treatment while being kneaded and then is extruded and granulated in a granular shape at the outlet 15 of the extruder 12. The obtained granules are cooled, thereby obtaining food granules. Further, if necessary, a heating and drying process may be provided.

It is preferable that the conditions of the heat treatment in the pre-conditioner 11 and the extruder 12 are set such that the raw ingredients are not excessively heated and the effect of improving digestibility resulting from pregelatinization of starch is obtained.

As a method of extruding and granulating food granules using an extrusion granulator that includes the pre-conditioner 11 and the extruder 12, for example, a method described in "Small Animal Clinical Nutrition 4th Edition" (edited by Michael S. Hand, Craig D. Thatcher, Rebecca L. Remillard, and Philip Roudebusg, published by Mark Morris Associates; 2000; p 157 to 190) can be used.

The size and the shape of food granules are not particularly limited as long as the food granules are formed in a size and a shape which are suitable for a pet to eat.

Examples of the shapes of food granules include a spherical shape, a polygonal shape, a cylindrical shape, a donut shape, a plate shape, a circular, curved tablet shape, a heart shape, a star shape, a fish shape, and a wheel shape.

In the size of a food granule, for example, the shortest diameter and the longest diameter are both preferably in a range of 3 to 30 mm, more preferably in a range of 6 to 16.5 mm, and still more preferably in a range of 8 to 12 mm.

### (Coloring process)

A coloring process is carried out by adding additive solutions 3, 4, and 5 that contain a coloring component in the extrusion granulator 1. Specifically, a nozzle (the reference numeral 16 in the figure indicates a nozzle position) that injects a liquid to the mixture conveyed in the extrusion granulator 1 is provided so that the additive solutions containing a coloring component are added, in the path of the extrusion granulator 1.

The moisture content of food granules to be continuously discharged from the extrusion granulator 1 can be maintained to be constant by continuously adding the additive solutions at a constant flow rate to the mixture conveyed in the extrusion granulator 1 at a constant flow rate.

In the present embodiment, food granules of at least two colors are continuously produced by temporally changing the colors of the additive solutions using at least two different colors of the additive solutions 3, 4, and 5 in one extrusion granulator 1. Further, the flow rates of the additive solutions 3, 4, and 5 are maintained to be constant and thus the moisture contents of the food granules discharged from the extrusion granulator 1 are maintained to be constant. At least two colors of the food granules produced in the present embodiment have different coloring components, but the compositions, the sizes, and the shapes other than the coloring components are the same as each other.

For example, two colors of the additive solutions 3 and 4 are alternately added to the mixture conveyed in the extrusion granulator 1 respectively for a constant time and thus two colors of food granules are alternately discharged from the extrusion granulator 1.

In a case of at least three colors of the additive solutions, a cycle for which respective colors of the additive solutions 3, 4, and 5 are sequentially added is repeated, and thus at least three colors of food granules are discharged from the extrusion granulator 1 in constant order.

Due to the time at which respective colors of the additive solutions 3, 4, and 5 are added, the proportion (ratio of color of granules) of each color of food granules produced in one cycle can be adjusted.

One of at least two different colors of additive solutions may be an additive solution (also referred to as additive water) W formed of only water. Further, one of at least two colors of the food granules may be non-colored granules with the same color as the color of granules produced without using a coloring component.

When one additive solution 3 containing a coloring component is added to the mixture conveyed in the extrusion granulator 1 only for a predetermined time and then is switched with the additive water W, the depth of color of food granules continuously discharged from the extrusion granulator 1 is changed to light (thin). The non-colored granules are discharged when the time for adding the additive water W is long.

For example, when the additive solution 3 containing a red coloring component is added to the mixture conveyed in the extrusion granulator 1 only for a predetermined time and then is switched with the additive solution 4 containing a yellow coloring component, the color of food granules continuously discharged from the extrusion granulator is gradually changed from red to an intermediate color between red and yellow and then changed to yellow.

When a time for adding the additive water W is provided between the time for adding the red additive solution 3 and the time for adding the yellow additive solution 4, the color of food granules continuously discharged from the extrusion granulator is gradually changed from red to pale red and then changed to yellow. When the time for adding the additive water W is long, the color of food granules is gradually changed from red to a non-colored color through pale red and then changed to yellow.

The timing and the time for adding the additive water W are set such that the target color tone of food granules can be obtained.

In a case where colored food granules are produced using an extrusion granulator that includes the pre-conditioner 11 and the extruder 12, the additive solutions may be added in the path of the pre-conditioner 11 or the extruder 12.

In a case where the additive solutions are the same as each other as shown in the experimental examples described below, it is preferable that the additive solutions are added in the path of the extruder 12 rather than the pre-conditioner 11 because the amount of additive solutions required for coloring food granules to obtain a predetermined color tone is small. That is, from the viewpoints that the coloring efficient is excellent and the production cost is further reduced, it is preferable that the additive solutions are added to the kneaded material in the extruder 12 to color the food granules.

When the position for adding additive solutions (nozzle position 16) in a case where the additive solutions are added in the path of the extruder 12 is close to the outlet 15, coloring unevenness resulting from insufficient mixing is likely to occur. Therefore, when the distance between an inlet 14 and the outlet 15 of the extruder 12 is set to 1, a distance D (relative value) between the inlet 14 and the nozzle position 16 is preferably in a range of 0 to 0.5 and more preferably in a range of 0 to 0.2.

### [Mixing process]

In the mixing process, food granules of at least two colors are sequentially put into a tank 2 and layered.

In the present embodiment, a cycle for which food granules of at least two colors are continuously discharged from one extrusion granulator 1 in predetermined order is repeated. The discharged food granules are cooled to room temperature while being conveyed and then continuously put into one tank 2.

After the food granules are discharged from the extrusion granulator 1, a process of allowing the food granules to pass through a drier and continuously drying the food granules before the food granules are put into the tank 2 and a process of cooling the food granules while conveying the dried food granules may be provided. Further, a process of coating the food granules with external additives (oils and fats, liquid palatability enhancers (animal raw ingredient extracts or vegetable raw ingredient extracts), or the like) while conveying the food granules may be provided.

Food granules of at least two colors are layered in the tank 2 in order of being discharged from the extrusion granulator 1 by continuously putting the food granules into the tank 2 from the top. The thickness of the layer of each color is determined based on the time for adding each color of additive solution.

After at least two colors of the food granules are layered in the tank 2 in the above-described manner, the food granules are discharged from a discharge port 21 provided on the bottom of the tank 2. In this manner, at least two colors of the food granules layered in the tank 2 are discharged while being mixed together at the time of flowing into the discharge port 21 due to the own weight of the food granules. As a result, a mixture in which the ratio of each color of granules is the substantially the same as the proportion of each color of food granules produced in one cycle is obtained.

From the viewpoint of reliably stabilizing the ratio of each color of granules in a mixture to be obtained, it is preferable that the discharge of the food granules from the tank 2 is started after respective colors of food granules are layered (three cycles or more) such that three or more layers for each color are present.

The discharge of food granules from the tank 2 may be performed continuously or intermittently.

The discharge of food granules from the discharge port 21 may be started after the supply of the food granules to the tank 2 is stopped or food granules may be continuously supplied to the same tank 2 while the food granules are continuously discharged from the discharge port 21 of the tank 2. The operation can be continuously performed for a long time by setting the rate of food granules to be supplied to the tank 2 to be the same as the rate of food granules to be discharged from the tank 2.

The structure of the tank 2 is not particularly limited as long as the food granules put into the tank from the top are layered in order and the food granules can be discharged from the bottom at a predetermined rate.

From the viewpoint that food granules in the tank 2 easily flow into the discharge port 21, it is preferable that the inner wall (side surface) of the tank is in a cylindrical shape and the bottom surface thereof is in a conical shape whose diameter decreases downward.

It is preferable that the tank includes means for adjusting the rate of food granules to be discharged from the discharge port 21. For example, the rate of food granules to be discharged can be controlled by providing a rotary feeder or a vibratory feeder (not illustrated) for the discharge port 21.

In addition, a baffle plate (not illustrated) or the like that promotes mixing of food granules may be suitably provided in the vicinity of the discharge port 21 in the tank 2.

### [Packaging process]

The mixture of food granules to be discharged from the tank 2 is weighed and accommodated in a packaging container to obtain pet food (product). The mixture discharged from the tank 2 may be used for a packaging process after being temporarily accommodated in a storage tank (not illustrated).

A predetermined amount of other ingredients may be mixed into the pet food (product) other than the mixture of food granules to be discharged from the tank 2. Other ingredients are not particularly limited as long as the ingredients can be used as feed. Specific examples thereof include separately granulated food granules and small pieces formed of dried products of dried meat or seafood. The shape or the size of other ingredients is not particularly limited as long as the ingredients are formed in a size and a shape which are suitable for a pet to eat. For example, a dried product of small fish may be used without carrying out cutting processing.

### <Effects>

According to the present embodiment, at the time of producing pet food (product) obtained by mixing food granules of at least two colors at predetermined proportions, at least one tank 2 used to store food granules is present. Therefore, pet food obtained by mixing food granules of at least two colors at predetermined proportions can be produced without causing an increase in size of a device. In this manner, the production cost can be reduced.

The number of colors of food granules to be mixed is preferably three or more and the effects for reducing the size of a device by means of applying the present embodiment become large as the number of colors is larger. The upper limit of the number of colors is not particularly limited, but is preferably four or more from the viewpoint of managing the state in which food granules are mixed together.

### <Modified example>

In the present embodiment, food granules of at least two colors are continuously produced by changing the colors of additive solutions 3, 4, and 5 using one extrusion granulator 1 and then continuously put into the tank 2, but two or more extrusion granulators may be used as long as food granules of at least two colors are sequentially put into the tank 2 and layered.

The method of using one extrusion granulator 1 is suitable for producing a mixture of food granules of at least two colors which have different coloring components and in which the compositions and the shapes of other components are the same as each other.

When two or more extrusion granulators are used, in addition to the mixture described above, a mixture including food granules which have different colors and in which the compositions and/or the shapes of other components are different from each other can be produced.

### [Examples]

The present invention will be described in detail with reference to the examples described below, but the present invention is not limited thereto. Hereinafter, "%" indicates "% by mass" unless otherwise noted.

### [Example 1]

In the present example, dry type pet food was produced using an extrusion granulator including a pre-conditioner (pre-regulator) 11 and an extruder 12. A nozzle (nozzle position 16) supplying additive solutions 3, 4, and 5 to the inside of the extruder 12 at a constant flow rate and having an inner diameter of 5 mm was provided in the path of the extruder 12. When the distance between the inlet 14 and the outlet 15 of the extruder 12 is set to 1, a distance D (relative value) between the inlet 14 and the nozzle position 16 was 0.1.

Powder raw ingredients having the following composition were mixed together while being ground using a grinder, thereby obtaining mixed powder. A powder colorant was not used.

The contents of cereals, meat, vegetable protein, and other additives were 60% by mass, 20% by mass, 10% by mass, and 10% by mass, respectively.

The mixed powder was quantitatively and continuously supplied to the pre-conditioner 11 of the extrusion granulator, conveyed therein while being mixed together, and then continuously supplied to the extruder 12. Water and water vapor were added to the mixed powder conveyed in the pre-conditioner 11 to increase the moisture content and a heat treatment was performed at 90°C ± 10°C for 120 seconds.

In the extruder 12, the mixture continuously supplied from the pre-conditioner 11 was subjected to a heat treatment at 110°C ± 10°C for 30 seconds while being kneaded and conveyed under pressure and was puffed at the same time when the mixture was extruded and granulated in a granular shape at the outlet 15 of the extruder 12. Additive solutions were added to the kneaded material to be conveyed in the extruder 12 and then a coloring process was performed using a coloring method described below.

The conditions of extrusion and granulations were set such that the shape of puffed granules was in a columnar shape close to a circular shape in which the puffed granules had a diameter of 8 mm and a height (thickness) of 8 mm.

After the puffed granules to be continuously discharged from the extruder 12 in this manner were subjected to a drying treatment at approximately 120°C for 15 minutes by allowing the puffed granules to pass through a drier (not illustrated), the puffed granules were cooled to room temperature (25°C) to continuously produce food granules. The moisture content of the obtained food granules was 9% by mass and the bulk density thereof was 370 g/L.

The rate of extrusion and granulation of food granules using the extruder 12 was 3500 kg/hour.

### (Coloring method)

A red additive solution 3 formed by dissolving a red coloring component in water, a yellow additive solution 4 formed by dissolving a yellow coloring component in water, a green additive solution 5 formed by dissolving a green coloring component in water, and an additive solution (additive water) W formed of only water were prepared.

A cycle in which the red additive solution 3, the additive water W, the yellow additive solution 4, the additive water W, the green additive solution 5, and the additive water W were added in this order respectively at the same constant flow rate to a kneaded material in the extruder 12 from a nozzle disposed in the position 16 in the path of the extruder 12 was repeated and the additive solutions were continuously added at the same time. The times for adding respective solutions (time for supplying solutions) were set such that the ratios (designed values, on a mass basis) of respective colors of granules in food granules to be continuously produced were 35% by mass of red granules, 50% by mass of yellow granules, and 15% by mass of green granules. The times for adding respective solutions and the amounts of granulated food granules obtained by multiplying the times for adding respective solutions by the extrusion and granulation rate are listed in Table 1.

As shown in Table 1, when the red additive solution 3, the yellow additive solution 4, and the green additive solution 5 were switched after the additive water W was supplied for 10 seconds, the color tones of the food granules to be continuously produced were gradually changed from red to pale red, gradually changed from yellow to pale yellow, and gradually changed from green to pale green by supplying the additive water W for 10 seconds and then switching the additive water, and this cycle was repeated. In other words, formation of food granules assuming an intermediate color between red and yellow, an intermediate color between yellow and green, or an intermediate color between green and red was satisfactorily suppressed.

The food granules continuously produced in this manner were continuously put into the tank 2. In the tank 2, a layer formed of red food granules (indicated by R in the figure), a layer formed of yellow food granules (indicated by Y in the figure), and a layer formed of green food granules (indicated by G in the figure) were repeatedly layered in this order. When the inner diameter of the tank 2 was set to 1, the thickness (relative value) of each layer was acquired through calculation based on the bulk density. The results are listed in Table 1.

After 60 minutes from the start of food granules being put into the tank 2, the addition of the food granules to the tank 2 was stopped and the food granules were discharged by opening the discharge port 21 provided on the bottom of the tank 2.

The rate of food granules to be supplied to the tank 2 was 3,500 kg/hour which was the same as the rate of extrusion and granulation. In the calculated value, lamination of layers was continued for 5.7 cycles for 60 minutes. The rate of food granules to be discharged from the tank 2 was set to 3,500 kg/hour and then the food granules were continuously discharged for 50 minutes.

A mixture formed by mixing red food granules, yellow food granules, and green food granules with each other was discharged from the discharge port 21 of the tank 2. The mixture was temporarily accommodated in a storage tank and 500 g of mixed granules were accommodated in each packaging container, thereby producing pet food (product).

During the production, 100 g of food granules were periodically sampled from the mixture of food granules to be discharged from the bottom of the tank 2, the sampled food granules were separated into each color of food granules, and the mass of each color of food granules was measured, and then the ratio of each color of food granules was acquired. As the result, it was determined that the mixed state was satisfactory when the mass of red granules was in a range of 35% by mass ± 10% by mass, the mass of yellow granules was in a range of 50% by mass ± 10% by mass, and the mass of green granules was in a range of 15% by mass ± 10% by mass.

Food granules (350 kg) to be discharged for initial 6 minutes from the start of discharge of food granules from the tank 2 were in a state in which respective colors of food granules were insufficiently mixed. Food granules discharged after the initial 6 minutes were in a satisfactorily mixed state.

**[Table 1]**

| | Additive solution | | Amount of granulated food granules (kg) | Ratio of each color of granules (designed value) |
|---|---|---|---|---|
| | Color | Time for addition (second) | | |
| One cycle | Red | 210 | 204.2 | 35% |
| | Colorless (water) | 10 | 9.7 | |
| | Yellow | 300 | 291.7 | 50% |
| | Colorless (water) | 10 | 9.7 | |
| | Green | 90 | 87.5 | 15% |
| | Colorless (water) | 10 | 9.7 | |
| Total amount of food granules of one cycle | - | 630 | 612.5 | 100% |

### [Example 2]

In the present example, semi-moist type pet food (product) was produced using the same extrusion granulator as in Example 1.

Powder raw ingredients having the following composition were mixed together while being ground using a grinder, thereby obtaining mixed powder. A powder colorant was not used.

The contents of cereals, meat, vegetable protein, and other additives were 30% by mass, 20% by mass, 10% by mass, and 40% by mass, respectively.

The mixed powder was quantitatively and continuously supplied to the pre-conditioner 11 of the extrusion granulator, conveyed therein while being mixed together, and then continuously supplied to the extruder 12. Water and water vapor were added to the mixed powder conveyed in the pre-conditioner 11 to increase the moisture content and a heat treatment was performed at 90°C ± 10°C for 120 seconds.

In the extruder 12, the mixture continuously supplied from the pre-conditioner 11 was subjected to a heat treatment at 110°C ± 10°C for 30 seconds while being kneaded and conveyed under pressure and was puffed at the same time when the mixture was extruded and granulated in a granular shape at the outlet 15 of the extruder 12. Additive solutions were added to the kneaded material to be conveyed in the extruder 12 and then a coloring process was performed using a coloring method described below.

The conditions of extrusion and granulations were set such that the shape of puffed granules was in a columnar shape close to a circular shape in which the puffed granules had a diameter of 10 mm and a height (thickness) of 7.5 mm.

The puffed granules to be continuously discharged from the extruder 12 in this manner were cooled to room temperature (25°C) without being dried to continuously produce food granules. The moisture content of the obtained food granules was 25% by mass and the water activity thereof was 0.80.

The rate of extrusion and granulation of food granules using the extruder 12 was 4,500 kg/hour.

### (Coloring method)

A red additive solution 3 formed by dissolving a red coloring component in water, a yellow additive solution 4 formed by dissolving a yellow coloring component in water, a green additive solution 5 formed by dissolving a green coloring component in water, and an additive solution W formed of only water were prepared.

A cycle in which the red additive solution 3, the additive water W, the yellow additive solution 4, the additive water W, the red additive solution 3, the additive water W, the green additive solution 5, and the additive water W were added in this order respectively at the same constant flow rate to a kneaded material in the extruder 12 from a nozzle disposed in the position 16 in the path of the extruder 12 was repeated and the additive solutions were continuously added at the same time. The times for adding respective solutions (time for supplying solutions) were set such that the ratios (designed values, on a mass basis) of respective colors of granules in food granules to be continuously produced were 33% by mass of red granules, 17% by mass of yellow granules, 33% by mass of red granules, and 17% by mass of green granules. The times for adding respective solutions and the amounts of granulated food granules obtained by multiplying the times for adding respective solutions by the extrusion and granulation rate are listed in Table 2.

As shown in Table 2, when the red additive solution 3, the yellow additive solution 4, the red additive solution 3, and the green additive solution 5 were switched after the additive water W was supplied for 10 seconds, the color tones of the food granules to be continuously produced were gradually changed from red to pale red, gradually changed from yellow to pale yellow, gradually changed from red to pale red, and gradually changed from green to pale green by supplying the additive water W for 10 seconds and then switching the additive water, and this cycle was repeated. In other words, formation of food granules assuming an intermediate color between red and yellow, an intermediate color between yellow and green, or an intermediate color between green and red was satisfactorily suppressed.

The food granules continuously produced in this manner were continuously put into the tank 2. In the tank 2, a layer formed of red food granules, a layer formed of yellow food granules, a layer formed of red food granules, and a layer formed of green food granules were repeatedly layered in this order. When the inner diameter of the tank 2 was set to 1, the thickness (relative value) of each layer was acquired through calculation based on the bulk density. The results are listed in Table 2.

After 30 minutes from the start of food granules being put into the tank 2, the addition of the food granules to the tank 2 was stopped and the food granules were discharged by opening the discharge port 21 provided on the bottom of the tank 2.

The rate of food granules to be supplied to the tank 2 was 4,500 kg/hour which was the same as the rate of extrusion and granulation. In the calculated value, lamination of layers was continued for 3.1 cycles for 30 minutes. The rate of food granules to be discharged from the tank 2 was set to 4,500 kg/hour and then the food granules were continuously discharged for 22 minutes.

A mixture formed by mixing red food granules, yellow food granules, and green food granules with each other was discharged from the discharge port 21 of the tank 2. The mixture was temporarily accommodated in a storage tank and 500 g of the mixed granules were accommodated in each packaging container, thereby producing pet food (product).

During the production, 100 g of food granules were periodically sampled from the mixture of food granules to be discharged from the bottom of the tank 2, the sampled food granules were separated into each color of food granules, and the mass of each color of food granules was measured, and then the ratio of each color of food granules was acquired. As the result, it was determined that the mixed state was satisfactory when the mass of red granules was in a range of 66% by mass ± 10% by mass, the mass of yellow granules was in a range of 17% by mass ± 10% by mass, and the mass of green granules was in a range of 17% by mass ± 10% by mass.

Food granules (375 kg) discharged for initial 5 minutes from the start of discharge of food granules from the tank 2 were in a state in which respective colors of food granules were insufficiently mixed. Food granules discharged after the initial 5 minutes were in a satisfactorily mixed state.

**[Table 2]**

| | Additive solution | | Amount of granulated food granules (kg) | Ratio of each color of granules (designed value) |
|---|---|---|---|---|
| | Color | Time for addition (second) | | |
| One cycle | Red | 180 | 225.0 | 33% |
| | Colorless (water) | 10 | 12.5 | |
| | Yellow | 90 | 112.5 | 17% |
| | Colorless (water) | 10 | 12.5 | |
| | Red | 180 | 225.0 | 33% |
| | Colorless (water) | 10 | 12.5 | |
| | Green | 90 | 112.5 | 17% |
| | Colorless (water) | 10 | 12.5 | |
| Total amount of food granules of one cycle | - | 580 | 725.0 | 100% |

### [Experimental examples]

In the present examples, dry type food granules were produced respectively using the same extrusion granulator (additive solutions were added using the extruder 12) as in Example 1 or an extrusion granulator (additive solutions were added using the pre-conditioner 11) in which the same nozzle as in Example 1 was provided in the pre-conditioner 11 and the amounts of additive solutions to be used required for performing the coloring in the same level as described above were compared with each other.

### (Experimental Example 1)

Method A: Red food granules were continuously produced using a method of adding a red additive solution in the path of the pre-conditioner 11.
Method B: Red food granules were continuously produced using a method of adding a red additive solution in the path of the extruder 12.

The conditions for producing food granules of the method A and the method B are the same as each other except that the positions for adding additive solutions and the flow rates of the additive solutions are different from each other. The additive solutions are the same as each other.

In the method A and the method B, the flow rates of additive solutions when a predetermined color tone (depth of color) of food granules was obtained were examined. The results thereof are listed in Table 3. Table 3 shows the ratios of the flow rate (unit: %) in a case of using the method B to the flow rate in a case of using the method A.

### (Experimental Examples 2 and 3)

The additive solution used in Experimental Example 1 was changed to a yellow additive solution (Experimental Example 2) or a green additive solution (Experimental Example 3).

Except for this, the flow rates of the additive solutions when a predetermined color tone (depth of color) of food granules in the method A and the method B was obtained were examined in the same manner as in Experimental Example 1. The results are listed in Table 3.

**[Table 3]**

| | Flow rate of additive solution (mL/min) | | |
|---|---|---|---|
| | Experimental Example 1 (red) | Experimental Example 2 (yellow) | Experimental Example 3 (green) |
| Method A (addition in path of pre-conditioner) | 400 | 500 | 330 |
| Method B (addition in path of extruder) | 250 | 230 | 140 |
| Method B/methodA | 63% | 46% | 42% |

From the results of Table 3, it is preferable that the additive solutions containing coloring components are added in the path of the extruder 12 rather than the pre-conditioner 11 because the amounts of additive solutions to be used are small and the coloring can be efficiently carried out.

### Reference Signs List

- 1:: extrusion granulator
- 2:: tank
- 3, 4, 5:: additive solution containing coloring component
- 11:: pre-conditioner
- 12:: extruder
- 13:: outlet of pre-conditioner
- 14:: inlet of extruder
- 15:: outlet of extruder
- 16:: nozzle position
- 21:: discharge port of tank
- W:: additive solution (additive water) formed of only water

## Claims

1. A method of producing pet food in which food granules of at least two colors are mixed together, comprising:
a food granule producing process of producing food granules of at least two colors; and
a mixing process of mixing the food granules of at least two colors,
wherein the food granule producing process includes a powder raw ingredient mixing process of mixing together powder raw ingredients to obtain a mixed powder, an extruding and granulating process of supplying the mixed powder to an extrusion granulator to continuously produce food granules, and a coloring process of performing coloring by adding an additive solution that contains a coloring component to the extrusion granulator, and
the mixing process includes a process of sequentially putting the food granules of at least two colors into a tank to be layered and a process of discharging the food granules from the bottom of the tank to obtain a mixture of the food granules of at least two colors.

2. The method of producing pet food according to claim 1,
wherein additive solutions of at least two different colors are used in the coloring process to change the colors of food granules continuously produced by the extrusion granulator by changing the colors of the additive solutions and the food granules continuously discharged from the extrusion granulator are continuously put into the tank.

3. The method of producing pet food according to claim 2,
wherein an additive solution that contains the coloring component and an additive solution that does not contain the coloring component are used in the coloring process.

4. The method of producing pet food according to claim 3,
wherein the additive solution that contains the coloring component and the additive solution that does not contain the coloring component are alternately added in the coloring process.

5. The method of producing pet food according to any one of claims 1 to 4,
wherein the extrusion granulator includes a pre-regulator which adds at least moisture to the mixed powder, stirs the mixture, and performs a heat treatment thereon and an extruder provided downstream of the pre-regulator, and
the coloring process is performed in the extruder.

6. The method of producing pet food according to any one of claims 1 to 5,
wherein the food granules of at least two colors are layered in the tank during the mixing process such that three or more layers for each color are respectively present and then the discharge of food granules from the tank is started.
